# EUROPÄISCHE PATENTANMELDUNG

(11) **EP 1 239 626 A1**
(43) Veröffentlichungstag der Anmeldung: **11.09.2002**
(21) Anmeldenummer: 01105590.2
(22) Anmeldetag: 06.03.2001
(51) Int. Cl.: H04L 7/033, H04L 7/04, H04B 7/26

(54) **Synchronisationsverfahren zur Verwendung in einem Ultra-Breitband-Kommunikationssystem**

(71) Anmelder: SIEMENS AKTIENGESELLSCHAFT, 80333 München (DE)
(72) Erfinder: Mohr, Werner, Dr., 81737 München (DE)

(57) **Zusammenfassung**

Die Erfindung betrifft ein Ultra-Breitband-Kommunikationssystem (1), eine Empfangseinheit (4) für ein Ultra-Breitband-Kommunikationssystem, sowie ein Ultra-Breitband-Empfangsverfahren. Die Empfangseinheit (4) empfängt ein von einer Sendeeinheit (2) ausgesendetes, impulslagemoduliertes Ultra-Breitband-Impulssignal (s). Zur Synchronisation der Empfangseinheit (4) wird ein in Abhängigkeit vom Takt der Empfangseinheit (4) erzeugtes, aus wiederhergestellten Ultra-Breitband-Impulsen (IW1) bestehendes Signal (s1_{wiederhergestellt}) mit dem empfangenen Ultra-Breitband-Impulssignal (s'') multipliziert. Das erzeugte Signal wird tiefpaßgefiltert, und dann zur Phasenregelung eines den Takt der Empfangseinheit (4) erzeugenden Oszillators verwendet.

## Beschreibung

Die Erfindung betrifft ein Ultra-Breitband-Kommunikationssystem, eine Empfangseinheit für ein Ultra-Breitband-Kommunikationssystem, sowie ein Ultra-Breitband-Empfangsverfahren.

Bei Ultra-Breitband- bzw. UWB-Systemen ("UWB" = Ultra Wideband) werden Informationen in Form einer Folge von jeweils nur extrem kurz andauernden Impulsen übertragen. Die Impulsdauer liegt dabei im Piko- bzw. Nanosekundenbereich, im allgemeinen zwischen 100 Pikosekunden und 1 Nanosekunde.

Eine derart kurze Impulsdauer führt zu einer extrem großen Bandbreite des Übertragungssignals, und damit zu sehr geringen spektralen Leistungsdichten (Übertragungsleistung in Watt pro Hertz Bandbreite). UWB-Übertragungssignale können somit von unberechtigten Dritten nur schwer vom Grundrauschpegel unterschieden werden, und sind deshalb relativ abhörsicher.

Des weiteren können für die Übertragung von UWB-Signalen Frequenzbereiche verwendet werden, die gleichzeitig von anderen, nicht mit UWB-Signalen arbeitenden Nachrichtenübertragungssystemen benutzt werden. Durch die wie oben erwähnt niedrigen spektralen Leistungsdichten von UWB-Signalen wird die Signalübertragung der anderen Nachrichtensysteme durch die UWB-Signale nicht oder nur wenig gestört.

Bei UWB-Systemen wird - abhängig von der jeweils zu übertragenden Information - die Lage der gesendeten UWB-Impulse geändert (Impulslagemodulation bzw. PPM ("PPM" = pulse position modulation)). Beispielsweise überträgt eine Sendeeinheit einen einer zu übertragenden "1" zugeordneten UWB-Impuls IM1 geringfügig, z.B. einige trillionstel Sekunden früher, als einen UWB-Impuls IM0, mit dem eine "0" übertragen werden soll. Um in einer der Sendeeinheit zugeordneten Empfangseinheit eine exakte Decodierung der empfangenen Impulse zu gewährleisten, muß die Empfangseinheit genau synchronisiert sein.

Die Erfindung hat zur Aufgabe, herkömmliche Ultra-Breitband-Empfangsverfahren, Ultra-Breitband-Kommunikationssysteme, sowie Empfangseinheiten für Ultra-Breitband-Kommunikationssysteme weiterzuentwickeln. Sie erreicht dieses und weitere Ziele durch die Gegenstände der Ansprüche 1, 11 und 22.

Vorteilhafte Weiterbildungen der Erfindung sind in den Unteransprüchen angegeben.

Gemäß der vorliegenden Erfindung empfängt eine Empfangseinheit ein von einer Sendeeinheit ausgesendetes, impulslagemoduliertes Ultra-Breitband-Impulssignal. Zur Synchronisation der Empfangseinheit wird beispielsweise jeweils ein aus wiederhergestellten "frühen" Ultra-Breitband-Impulsen, sowie ein aus wiederhergestellten "späten" Ultra-Breitband-Impulsen bestehendes Signal mit dem empfangenen Ultra-Breitband-Impulssignal multipliziert. Die beiden erzeugten Signale werden tiefpaßgefiltert, und dann addiert. Das Additionssignal wird zur Phasenregelung eines den Takt der Empfangseinheit erzeugenden Oszillators verwendet: mit Hilfe des Additionssignals kann ein VCO ("VCO" = Voltage Controlled Oscillator bzw. spannungsgesteuerter Oszillator) einer entsprechend wie bei herkömmlichen PLL-Schaltungen ("PLL" = Phase-Locked Loop bzw. Phasensynchronisationsschleife) aufgebauten Regelschleife so angesteuert werden, dass Taktabweichungen eliminiert werden. Auf diese Weise kann der Takt der Empfangseinheit entsprechend wie bei PLL-Schaltungen in den Fangbereich gebracht, und dann mit relativ hoher Genauigkeit im Fangbereich gehalten werden.

Im folgenden wird die Erfindung anhand eines Ausführungsbeispiels und der beigefügten Zeichnung näher erläutert. In der Zeichnung zeigt:
- Figur 1: eine schematische Darstellung eines Ausführungsbeispiels eines UWB-Übertragungssystems gemäß der vorliegenden Erfindung;
- Figur 2: eine Folge von UWB-Impulsen, die von den in Fig. 1 dargestellten UWB-Sendeeinheiten ausgesendet werden;
- Figur 3: eine Synchronisationseinheit, welche in der in Fig. 1 dargestellten Empfangseinheit verwendet wird; und
- Figur 4: Signaldiagramme von in der in Fig. 3 dargestellten Synchronisationseinheit vorkommenden Signalen.

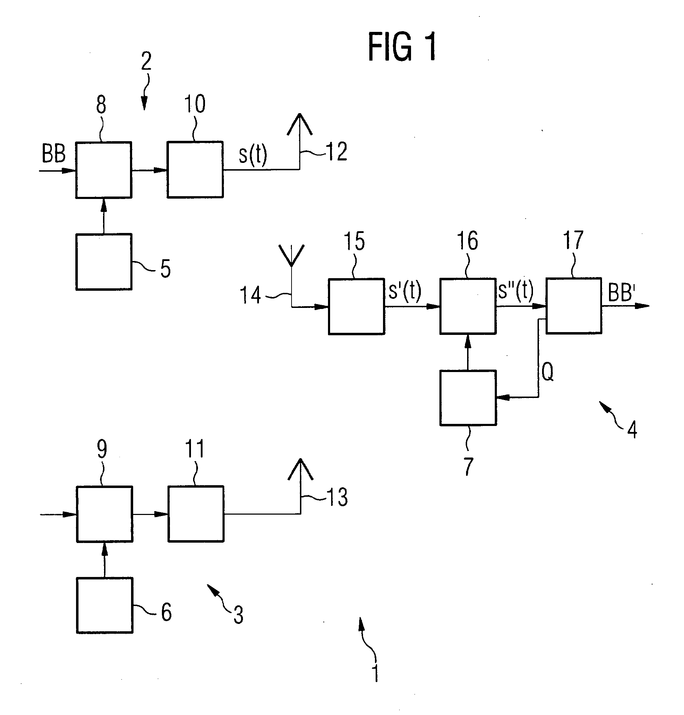

Figur 1 zeigt eine schematische Darstellung eines UWB-Übertragungssystems 1. Dieses weist eine erste Sendeeinheit 2, eine zweite Sendeinheit 3, eine Empfangseinheit 4, sowie weitere, hier nicht dargestellte Sende- und/oder Empfangseinheiten auf.

Die Sendeeinheiten 2, 3 enthalten jeweils eine Pseudo-Zufallscode-Erzeugungseinrichtung 5, 6, ein Gate 8, 9, eine Modulations-/Sendeeinrichtung 10, 11, sowie eine Antenneneinrichtung 12, 13. Die Empfangseinheit 4 ist ähnlich wie die Sendeeinheiten 2, 3 aufgebaut, und weist eine Antenneneinrichtung 14, eine Funk-Empfangseinrichtung 15, eine Pseudo-Zufallscode-Erzeugungseinrichtung 7, ein Gate 16, sowie eine Demodulationseinrichtung 17 auf.

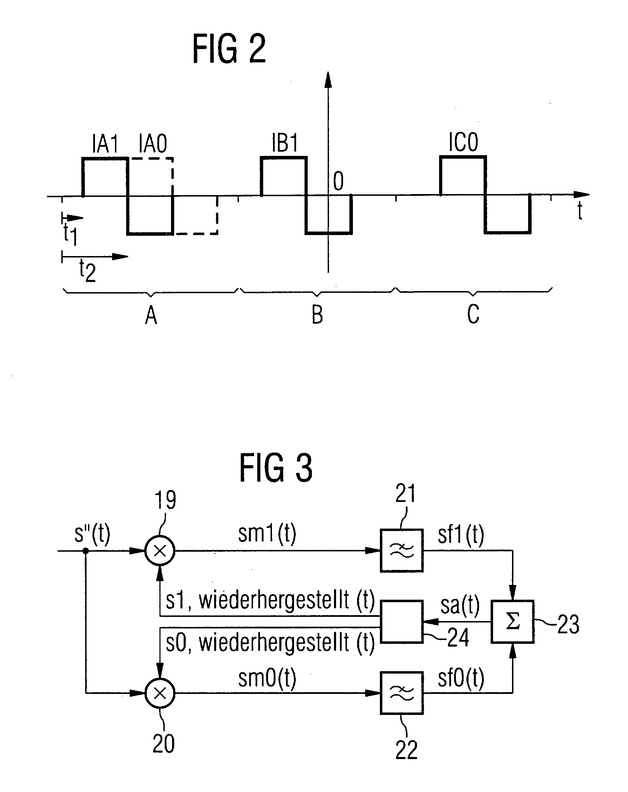

Der Informationsaustausch zwischen den Sendeeinheiten 2, 3 und der Empfangseinheit 4 erfolgt gemäß Figur 2 mittels Ultra-Breitband-Impulsen IA1, IB1, IC0. Um zu verhindern, daß sich die Impulse IA1, IB1, IC0 der einzelnen Sendeeinheiten 2, 3 überlagern, werden die Impulse IA1, IB1, IC0 im TDMA-Vielfachzugriffsverfahren übertragen ("TDMA" = time division multiplex access bzw. Zeitmultiplexzugriff). Dabei sind jeder Sendeeinheit 2, 3 jeweils bestimmte Zeitfenster A, B, C zugeordnet (beim hier gezeigten Ausführungsbeispiel ist der ersten Sendeeinheit 2 z.B. das Zeitfenster A zugeordnet, der zweiten Sendeeinheit 3 z.B. das Zeitfenster B, und einer weiteren, nicht dargestellten Sendeeinheit z.B. das Zeitfenster C). Die Zeitfenster A, B, C haben alle im wesentlichen die gleiche Länge, hier ca. 400 Pikosekunden. Die einer bestimmten Sendeeinheit 2, 3 zugeordneten Zeitfenster folgen in unregelmäßigen, von einem Pseudo-Zufallscode bestimmten zeitlichen Abständen aufeinander (Time Hopping).

Wieder bezogen auf Fig. 1 ist der der jeweiligen Sendeeinheit 2, 3 zugeordnete Pseudo-Zufallscode jeweils in der Pseudo-Zufallscode-Erzeugungseinrichtung 5, 6 der entsprechenden Sendeeinheit 2, 3 abgespeichert. Des weiteren sind in der Pseudo-Zufallscode-Erzeugungseinrichtung 7 der Empfangseinheit 4 die Pseudo-Zufallscodes derjenigen Sendeeinheiten 2, 3 gespeichert, von denen die Empfangseinheit 4 Informationen empfangen soll.

Werden z.B. von der ersten Sendeeinheit 2 aus Informationen (z.B. eine Folge von Datenbits) zur Empfangseinheit 4 übertragen, wird das die Informationen enthaltende Basisbandsignal BB dem Gate 8 zugeführt. Das jeweils zu übertragende Datenbit des Basisbandsignals BB wird vom Gate 8 zu dem vom entsprechenden Pseudo-Zufallscode definierten Zeitpunkt an die Modulations-/Sendeeinrichtung 10 weitergegeben.

In der Modulations-/Sendeeinrichtung 10 wird das zu übertragende Datenbit in einen UWB-Impuls umgewandelt. Dabei wird- bezogen auf den Takt der Sendeinheit 2 - die zeitliche Lage des UWB-Impulses in Abhängigkeit von der jeweils zu übertragenden Information gewählt (Impulslagemodulation bzw. PPM ("PPM" = pulse position modulation)). Wie in Fig. 2 gezeigt ist, beginnt - bezogen auf einen Bezugszeitpunkt, der aus dem synchronisierten Taktgenerator gewonnen wird - ein einer zu übertragenden "1" zugeordneter UWB-Impuls IA1 geringfügig früher, als ein UWB-Impuls IA0, mit dem eine "0" übertragen werden soll (in Fig. 2 gestrichelt dargestellt).

Beispielsweise beginnt der "1"-er Impuls IA1 eine erste vorbestimmte Zeitdauer t1 (hier: 50 Pikosekunden), und der "0"er Impuls IA0 eine zweite, vorbestimmte Zeitdauer t2 (hier: 150 Pikosekunden) nach Beginn des der ersten Sendeeinheit 2 zugeordneten Zeitfensters A.

Als Impulse können beliebige, mittelwertfreie Impulse kurzer Dauer und hoher Bandbreite verwendet werden.

Bei dem hier beschriebenen Ausführungsbeispiel beträgt die Dauer der UWB-Impulse IA1, IB1, IC0 ca. 200 Pikosekunden (Impulsdauer t). Die UWB-Impulse IA1, IB1, IC0 haben jeweils die Form von Gauß-impulsförmigen, einperiodigen, monozyklischen Schwingungen (hier: die Form von Gauß-Impulsen erster Ableitung). Bei alternativen, hier nicht dargestellten Ausführungsbeispielen können stattdessen z.B. auch RechteckImpulse, Sägezahnimpulse, etc., und/oder statt einperiodiger Schwingungen halb- oder mehrperiodige Schwingungen verwendet werden (z.B. Schwingungen, die nur wenige Perioden umfassen, z.B. bi- oder trizyklische Rechteckschwingungen)).

Wieder bezogen auf Fig. 1 werden die in der ersten Sendeeinheit 2 erzeugten Impulse IA1 bzw. IA0 einem ebenfalls in der Modulations-/Sendeeinrichtung 10 enthaltenen Hochpassfilter zugeführt (nicht dargestellt). Dieses weist eine Grenzfrequenz von ca. 1 GHZ auf. Durch das Hochpassfilter werden aus dem von der Modulations-/Sendeeinrichtung 10 erzeugten Impulssignal Frequenzbereiche herausgefiltert, die unter 1 GHz liegen. Dadurch wird erreicht, dass das gefilterte UWB-Impulssignal s(t) keinen Gleichanteil aufweist (d.h. die durchschnittliche Impulsspannung bei 0V liegt). Außerdem wird vermieden, dass das UWB-Impulssignal s(t) von starken Fernseh- und Radiosendesignalen gestört wird.

Das gefilterte UWB-Impulssignal s(t) wird dann der Antenneneinrichtung 12 der ersten Sendeeinheit 2 zugeführt. Von dort wird das Signal s(t) per Funk an die Antenneneinrichtung 14 der Empfangseinheit 4 übertragen, und dann zunächst an deren Funk-Empfangseinrichtung 15, und von dort aus an das Gate 16 weitergeleitet (UWB-Empfangsimpulssignal s'(t)).

Wie oben bereits erwähnt, ist in der Pseudo-Zufallscode-Erzeugungseinrichtung 7 der Empfangseinheit 4 ein Pseudo-Zufallscode gespeichert, der von der Pseudo-Zufallscode-Erzeugungseinrichtung 7 an das Gate 16 geliefert wird. Dieses lässt das empfangene Impulssignal s'(t) nur während der vom Pseudo-Zufallscode definierten Zeiträume passieren, d.h. zu dem der Sendeeinheit 2 zugeordneten Zeitfenster A, in dem die Empfangseinheit 4 Informationen empfangen soll. Dadurch werden der Demodulationseinrichtung 17 nur diejenigen im Signal s(t) enthaltenen Impulse IA1' bzw. IA0' zugeführt, die von der ersten Sendeeinheit 2 stammen (Signal s" (t)).

Das von der Demodulationseinrichtung 17 erhaltene Signal s" (t) wird - entsprechend umgekehrt wie in der Modulations-/Sendeeinrichtung 10 der ersten Sendeeinheit 2 - in ein Basisbandsignal BB' zurückgewandelt. Hierzu wird in der Demodulationseinrichtung 17 ermittelt, ob - bezogen auf den Takt der Empfangseinheit 4 - ein Impuls relativ "früh", oder relativ "spät" empfangen wurde (siehe unten). Bei Ermittlung eines "frühen" Impulses IA1' gibt die Demodulationseinrichtung 17 ein Datenbit "1", und bei Ermittlung eines "späten" Impulses IA0' ein Datenbit "0" aus.

Um einen "frühen" oder "späten" Impuls auf exakte Weise ermitteln zu können, wird in der Demodulationseinrichtung 17 eine Taktsynchronisation vorgenommen. Dabei wird der Empfangseinheit-Takt aus dem empfangenen Impulssignal abgeleitet. Ein hierbei erzeugtes Synchronisationssignal Q wird gemäß Fig. 1 der Pseudo-Zufallscode-Erzeugungseinrichtung 7 zugeführt, und stellt dort sicher, daß die Funk-Empfangseinrichtung 15 das empfangene Impulssignal s'(t) während der exakt richtigen Zeiträume (Zeitfenster A) passieren läßt.

Die Takt-Synchronisation wird mit Hilfe einer in Fig. 3 gezeigten Synchronisationseinheit 18 durchgeführt.

Die Synchronisationseinheit 18 umfaßt einen ersten und zweiten Multiplizierer 19, 20, einen ersten Tiefpaß 21, einen zweiten Tiefpaß 22, einen Summierer 23, und eine Taktoszillator-Schaltungseinheit 24. Diese weist einen Schaltungsabschnitt auf, der im wesentlichen einer herkömmlichen PLL-Schaltung entspricht ("PLL" = Phase-Locked Loop bzw. Phasensynchronisationsschleife), dessen VCO ("VCO" = Voltage Controlled Oscillator bzw. spannungsgesteuerter Oszillator) im eingeschwungenen Zustand in Frequenz und Phase mit dem Takt der Sendeeinheit 2 übereinstimmt.

Der erste Multiplizierer 19 multipliziert das diesem zugeführte Impulssignal s" (t) mit einem von der Taktoszillator-Schaltungseinheit 24 erzeugten, "wiederhergestellten" Impuls-Signal s1_{wiederhergestellt} (t). Das Impulssignal s" (t) wird außerdem auch dem zweiten Multiplizierer 20 zugeführt, der dieses auf entsprechende Weise mit einem "wiederhergestellten" Impuls-Signal s0_{wiederhergestellt} (t) multipliziert, welches ebenfalls von der Taktoszillator-Schaltungseinheit 24 erzeugt wird.

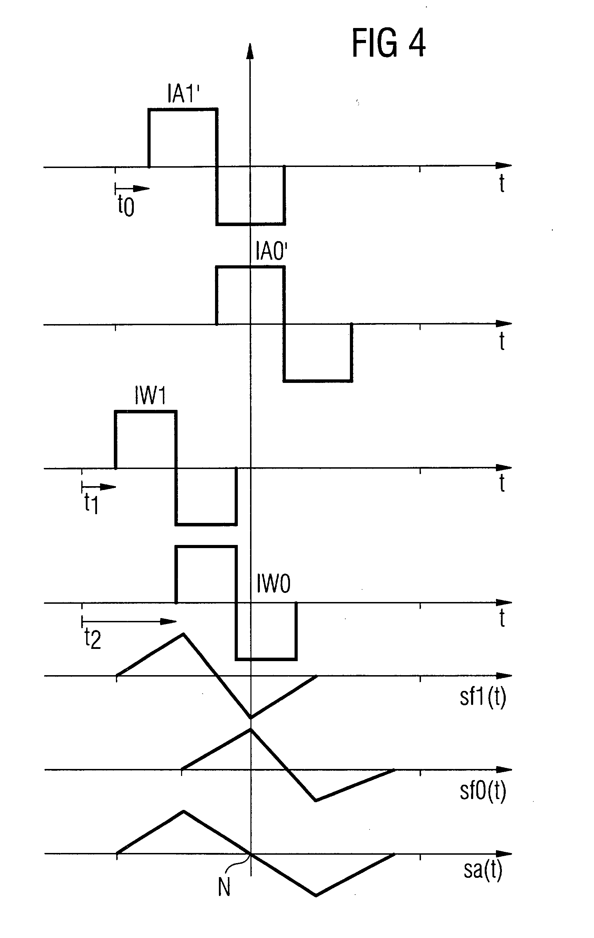

Die Signale s1_{wiederhergestellt} (t) bzw. Signal s0_{wiederhergestellt} (t) bestehen gemäß Fig. 4 aus einer Folge von Impulsen IW1 bzw. IW0, die hinsichtlich Impulsform und Impulsdauer im wesentlichen den von der Sendeeinheit 2 empfangenen Impulsen IA1' bzw. IA0' entsprechen. Sie dienen der fortlaufenden Synchronisation des Empfangseinheits-Takts.

Die Taktoszillator-Schaltungseinheit 24 erzeugt, wie in Fig. 4 gezeigt, die in den Signalen sl_{wiederhergestellt}(t) bzw. s0_{wiederhergestellt} (t) enthaltenen Impulse IW1 bzw. IW0 in Bezug auf den momentan gültigen Empfangseinheits-Takt (bzw. in Bezug auf ein von diesem definiertes, dem Sendeeinheits-Zeitfenster A entsprechendes Zeitfenster A', wobei der Impuls IW1 die Zeitdauer t1 (hier: 50 Pikosekunden), und der Impuls IW0 die Zeitdauer t2 (hier: 150 Pikosekunden) nach Beginn des Zeitfensters A' beginnt) .

Der zeitliche Versatz der Impulse IW1 bzw. IW0 gegenüber den empfangenen Impulsen IA1' bzw. IA0' entpricht der momentanen Taktabweichzeitdauer t0.

Das vom ersten Multiplizierer 19 erzeugte Multiplikationssignal sm1(t) wird (wieder bezogen auf Fig. 3) dem Tiefpaß 21, und das vom zweiten Multiplizierer 20 erzeugte Multiplikationssignal sm0(t) dem Tiefpaß 22 zugeführt. Die Grenzfrequenz der Tiefpässe 21, 22 ist jeweils so gewählt, dass aus den Multiplikationssignalen nur die Differenz-Frequenzanteile herausgefiltert werden, die deutlich unterhalb der Taktfrequenz f liegen. Wie in Fig. 4 gezeigt ist, sind in dem Fall, dass im Mittel gleich viele "frühe" Impulse IA1' empfangen werden, wie "späte" Impulse IA0', die von den Tiefpässen ausgegebenen Signale sf1(t) und sf0(t) identisch, jedoch zeitlich um eine halbe Impulsbreite versetzt.

Die gefilterten Signale sf1(t) bzw. sf0(t) werden in dem Summierer 23 addiert, und das Additionssignal sa(t) dann der Taktoszillator-Schaltungseinheit 24 zugeführt. Der Nullpunkt N des Additionssignals sa(t) fällt mit dem Synchronisations-Signal des Sendeeinheits-Taktgenerators zusammen. Die Abweichung zwischen Nullpunkt N des Additionssignals sa(t) und dem Nullpunkt des Empfangseinheits-Takts stellt damit ein Maß für die Taktabweichung dar.

Der VCO der Taktoszillator-Schaltungseinheit 24 kann somit mit einer entsprechend wie bei herkömmlichen PLL-Schaltungen aufgebauten Regelschleife so angesteuert werden, dass die Taktabweichung eliminiert wird. Durch die erfindungsgemäße Synchronisationseinheit 18 kann also der Empfangseinheits-Takt in den Fangbereich gebracht, und dann mit relativ hoher Genauigkeit im Fangbereich gehalten werden. Dadurch kann mit hoher Gewissheit bestimmt werden, ob ein Impuls relativ "früh", oder relativ "spät", d.h. ob ein Datenbit "1", oder ein Datenbit "0" empfangen wurde.

## Patentansprüche

1. Ultra-Breitband-Empfangsverfahren, wobei eine Empfangseinheit (4) ein von einer Sendeeinheit (2) ausgesendetes, impulslagemoduliertes Ultra-Breitband-Impulssignal (s) empfängt, **dadurch gekennzeichnet, daß** zur Synchronisation der Empfangseinheit (4) ein in Abhängigkeit vom Takt der Empfangseinheit (4) erzeugtes Signal (s1_{wiederhergestellt}), und das empfangene Ultra-Breitband-Impulssignal (s") verwendet wird.

2. Ultra-Breitband-Empfangsverfahren nach Anspruch 1, wobei das in Abhängigkeit vom Empfangseinheits-Takt erzeugte Signal (s1_{wiederhergestellt}), und das empfangene Signal (s'') miteinander multipliziert werden.

3. Ultra-Breitband-Empfangsverfahren nach Anspruch 2, wobei ein bei der Multiplikation erzeugtes Multiplikationssignal (sm1) tiefpassgefiltert wird.

4. Ultra-Breitband-Empfangsverfahren nach einem der vorhergehenden Ansprüche, wobei das in Abhängigkeit vom Empfangseinheits-Takt erzeugte Signal (s1_{wiederhergestellt}) aus wiederhergestellten Ultra-Breitband-Impulsen (IW1) besteht.

5. Ultra-Breitband-Empfangsverfahren nach Anspruch 4, wobei die wiederhergestellten Ultra-Breitband-Impulse "frühe" Ultra-Breitband-Impulse (IW1) sind.

6. Ultra-Breitband-Empfangsverfahren nach einem der vorhergehenden Ansprüche, wobei zur Synchronisation der Empfangseinheit (4) zusätzlich ein weiteres, in Abhängigkeit vom Takt der Empfangseinheit (4) erzeugtes Signal (s0_{wiederhergestellt}) verwendet wird, welches ebenfalls mit dem empfangenen Signal (s'') multipliziert wird.

7. Ultra-Breitband-Empfangsverfahren nach Anspruch 6, wobei ein bei der Multiplikation des weiteren Signals (s0_{wiederhergestellt}) und des empfangenen Signals (s'') erzeugtes, weiteres Multiplikationssignal (sm0) tiefpassgefiltert wird.

8. Ultra-Breitband-Empfangsverfahren nach Anspruch 6 oder 7, wobei das weitere, in Abhängigkeit vom Empfangseinheits-Takt erzeugte Signal (s0_{wiederhergestellt}) aus wiederhergestellten, "späten" Ultra-Breitband-Impulsen (IW0) besteht.

9. Ultra-Breitband-Empfangsverfahren nach Anspruch 7 oder 8, wobei jeweils das Multiplikationssignal (sm1) und das weitere Multiplikationssignal (sm0) nach der Tiefpassfilterung addiert werden.

10. Ultra-Breitband-Empfangsverfahren nach Anspruch 9, wobei ein bei der Addition erzeugtes Additionssignal (sa) zur Phasenregelung eines den Takt der Empfangseinheit (4) erzeugenden Oszillators verwendet wird.

11. Empfangseinheit (4) für ein Ultra-Breitband-Kommunikationssystem, welche so eingerichtet ist, dass sie ein impulslagemoduliertes Ultra-Breitband-Impulssignal (s) empfangen und demodulieren kann, **dadurch gekennzeichnet, daß** die Empfangseinheit (4) eine Synchronisationseinrichtung (18) aufweist, welche zur Synchronisation der Empfangseinheit (4) ein in Abhängigkeit vom Takt der Empfangseinheit (4) erzeugtes Signal (s1_{wiederhergestellt}), und das empfangene Ultra-Breitband-Impulssignal (s") verwendet.

12. Empfangseinheit (4) nach Anspruch 11, bei welcher die Synchronisationseinrichtung (18) einen Multiplizierer (19) aufweist, welcher das in Abhängigkeit vom Empfangseinheits-Takt erzeugte Signal (s1_{wiederhergestellt}), und das empfangene Signal (s'') multipliziert.

13. Empfangseinheit (4) nach Anspruch 12, bei welcher die Synchronisationseinrichtung (18) ein Tiefpassfilter (21) aufweist, welches ein bei der Multiplikation erzeugtes Multiplikationssignal (sm1) tiefpassfiltert.

14. Empfangseinheit (4) nach einem der Ansprüche 11 bis 13, wobei das in Abhängigkeit vom Empfangseinheits-Takt erzeugte Signal (s1_{wiederhergestellt}) aus wiederhergestellten Ultra-Breitband-Impulsen (IW1) besteht.

15. Empfangseinheit (4) nach Anspruch 14, wobei die wiederhergestellten Ultra-Breitband-Impulse "frühe" Ultra-Breitband-Impulse (IW1) sind.

16. Empfangseinheit (4) nach einem der Ansprüche 11 bis 15, wobei die Synchronisationseinrichtung (18) zur Synchronisation der Empfangseinheit (4) zusätzlich ein weiteres, in Abhängigkeit vom Takt der Empfangseinheit (4) erzeugtes Signal (s0_{wiederhergestellt}) Verwendet.

17. Empfangseinheit (4) nach Anspruch 16, bei welchem die Synchronisationseinrichtung (18) einen weiteren Multiplizierer (20) aufweist, welcher das weitere, in Abhängigkeit vom Takt der Empfangseinheit (4) erzeugte Signal (s0_{wiederhergestellt}) mit dem empfangenen Signal (s'') multipliziert.

18. Empfangseinheit (4) nach Anspruch 17, bei welcher die Synchronisationseinrichtung (18) ein weiteres Tiefpassfilter (22) aufweist, welches ein bei der Multiplikation des weiteren Signals (S0_{wiederhergestellt}) und des empfangenen Signals (s'') erzeugtes, weiteres Multiplikationssignal (sm0) tiefpassfiltert.

19. Empfangseinheit (4) nach einem der Ansprüche 16 bis 18, wobei das weitere, in Abhängigkeit vom Empfangseinheits-Takt erzeugte Signal (s0_{wiederhergestellt}) aus wiederhergestellten, "späten" Ultra-Breitband-Impulsen (IW0) besteht.

20. Empfangseinheit (4) nach einem der Ansprüche 18 oder 19, bei welcher die Synchronisationseinrichtung (18) einen Addierer (23) aufweist, welcher das Multiplikationssignal (sm1) und das weitere Multiplikationssignal (sm0) nach deren Tiefpassfilterung addiert.

21. Empfangseinheit (4) nach Anspruch 20, bei welcher die Synchronisationseinrichtung (18) einen den Takt der Empfangseinheit (4) erzeugenden Oszillator aufweist, zu dessen Phasenregelung ein bei der Addition erzeugtes Additionssignal (sa) verwendet wird.

22. Ultra-Breitband-Kommunikationssystem (1), welches eine Sendeeinheit (2), und eine Empfangseinheit (2) gemäß einem der Ansprüche 11 bis 21 aufweist.
